# EUROPÄISCHE PATENTSCHRIFT

(11) **EP 2 289 961 B1**
(45) Veröffentlichungstag und Bekanntmachung des Hinweises auf die Patenterteilung: **25.11.2020**
(21) Anmeldenummer: 10169786.0
(22) Anmeldetag: 16.07.2010
(51) Int. Cl.: C08G 18/50, C08G 18/75, C08G 65/26, C08G 18/71, C08G 18/79, C08G 18/12, C08G 18/48, C08G 18/22, C08G 18/20, C08G 77/46, C08G 18/28

(54) **Neuartige Urethangruppen enthaltende silylierte Präpolymere und Verfahren zu deren Herstellung**
New urethane groups containing silylated prepolymers and method for producing same
Nouveaux pré-polymères silylés contenant des groupes uréthanes et leur procédé de fabrication

(30) Priorität: 19.08.2009 DE 102009028636
(43) Veröffentlichungstag der Anmeldung: 02.03.2011
(73) Patentinhaber: Evonik Operations GmbH, 45128 Essen (DE)
(72) Erfinder: Schubert, Frank, 47506, Neukirchen-Vluyn (DE); Ferenz, Michael, 45147, Essen (DE); Knott, Wilfried, 45355, Essen (DE)
(74) Vertreter: Evonik Patent Association

(56) Entgegenhaltungen:
- WO-A1-01/21718
- WO-A1-2005/078036
- GB-A- 1 113 228

## Beschreibung

Die Erfindung betrifft neuartige Urethangruppen aufweisende Reaktionsprodukte aus Silylpolyethern und Isocyanat-Gruppen tragenden Verbindungen sowie ein Verfahren zur Herstellung solcher Reaktionsprodukte.

Polymere und Oligomere, die aus Isocyanatgruppen tragenden Verbindungen durch Umsetzung mit hydroxyl- oder aminfunktionellen Verbindungen hergestellt werden, sind seit langem und in großer chemischer Vielfalt bekannt. Je nach Stöchiometrie der Umsetzung und Art der Ausgangsverbindungen entstehen so Urethan- bzw. Harnstoffgruppen aufweisende Präpolymere, die endständig reaktive Isocyanat-, Hydroxyl- oder Amingruppen tragen und in der Synthese entweder in einem Folgeschritt weiter umgesetzt werden können oder aber häufig als vernetzbare Grundstoffe für Kleb- und Dichtstoffe oder auch als Beschichtungsmittel eingesetzt werden können. Besonders verbreitet und von wirtschaftlicher Bedeutung sind Isocyanatgruppen tragende Urethan-Präpolymere. So beschreibt US 4,038,304 die Herstellung eines Präpolymeren durch Umsetzung von 1 mol Trimethylolpropan mit 3 mol Isophorondiisocyanat (IPDI) zu einem isocyanatfunktionellen Präpolymer.

Gleichfalls sind Isocyanat-terminierte Urethanpräpolymere bekannt, die durch die Umsetzung eines Polyetherpolyols mit molaren Überschüssen eines organischen Diisocyanatmonomers gebildet werden und bei denen man gegebenenfalls den Überschuss des Diisocyanatmonomers destillativ entfernt.

Beispielsweise stellen die Lehren der Schriften UK Patent No. 1,101,410 und US 5,703,193, 4,061,662, 4,182,825, 4,385,171, 4,888,442 und 4,2788,577 auf solche Präpolymere ab. Gerade im Falle der Polyurethanelastomeren leiten sich die Präpolymeren häufig vom Toluoldiisocyanat und einer Reihe von Polyolen ab, die Polyether, Polyester und Polycaprolactone und ähnliche Verbindungsklassen umfassen können. Letztlich wird die Auswahl der Reaktivkomponenten nach Art und eingesetzter Menge vom gewünschten Eigenschaftsprofil des Polyurethans im Hinblick auf physikalische, chemische und dynamische Eigenschaften bestimmt. So determiniert der Isocyanatgehalt des Präpolymers die Shore A Härte.
In EP-A1-0 511 566 werden durch Feuchtigkeit härtende NCOreaktive Polyurethanschmelzklebstoffe beschrieben, die durch eine Additionsreaktion von Polyolen mit Polyisocyanaten gewonnen werden. Die Reaktionsprodukte sind bei derartigen Umsetzungen von mehrfunktionellen Ausgangsverbindungen häufig in ihrer chemischen Zusammensetzung und Molmasse komplexe Gemische von Präpolymeren. Durch Anlagerung von Isocyanatverbindungen an bereits entstandene Urethangruppen können je nach Reaktionsführung in unterschiedlichem Umfang auch Allophanatstrukturen entstehen. Generell ist es schwer zu vermeiden, dass Polymerisationen an Isocyanatgruppen untereinander stattfinden und auch verzweigte Präpolymerstrukturen entstehen. Daher kennt der Stand der Technik zahlreiche Verfahrensvarianten in der Synthese von Präpolymeren aus Isocyanaten und OH- bzw. aminfunktionellen Verbindungen mit dem Ziel, durch geschickte Auswahl von Katalysatoren, Reaktionsbedingungen und monomeren Ausgangsverbindungen definierte chemische Strukturen und Produkte mit meist möglichst niedriger Viskosität und geringer Molmassenverteilung zu erhalten.

DE 10 2006 056478 offenbart eine Variante der Präpolymersynthese, bei der der Weiterreaktion zu hochmolekularen Präpolymerstrukturen durch die Verwendung von Polyisocyanaten mit unterschiedlich reaktiven NCO-Gruppen entgegengewirkt wird. WO 99/24486 offenbart einen zweistufigen Prozess zur Herstellung eines Polyurethanbindemittels mit besonders niedrigem Gehalt an monomeren, nicht umgesetzten Isocyanatverbindungen.

Ferner sind Urethanpräpolymere bekannt, die härtbare funktionelle Gruppen wie Silangruppen enthalten.

Alkoxysilanfunktionelle Polyurethane, die sich über eine Silankondensation vernetzen, sind lange bekannt. Ein Übersichtsartikel zu dieser Thematik findet sich z.B. in "Adhesives Age" 4/1995, Seite 30 ff (Autoren: Ta-Ming Feng, B.A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.
Solche alkoxysilanfunktionellen Polyurethane können gemäß US 3,627,722 oder US 3,632,557 hergestellt werden, indem z.B. Polyetherpolyole mit einem Überschuss Polyisocyanat zu einem NCO-haltigen Präpolymer umgesetzt werden, das dann wiederum mit einem aminofunktionellen Alkoxysilan weiter umgesetzt wird. Das entstehende alkoxysilanfunktionelle Präpolymer enthält Harnstoff- und Urethangruppen in hoher Konzentration, die zu einer hohen Viskosität der Produkte führen.
Ein wirksames Konzept, zumindest den Anteil an der Wasserstoffbrückendichte, der durch die Harnstoffgruppen verursacht wird zu reduzieren, ist es, durch die Verwendung von sekundären Aminosilanen substituierte Harnstoffe zu erzeugen. Dazu wurden verschiedene Verfahren vorgeschlagen: US 3,627,722 und US 3,632,557 verwenden alkylsubstituierte Aminosilane, US 4,067,844 addiert Acrylate an das primäre Aminosilan und EP-A1 676 403 führt arylsubstituierte Aminosilane ein. All diese Verfahren können aber nur ein Wasserstoffatom an der terminalen Harnstoffgruppe ersetzen, alle weiteren Harnstoff- und Urethanprotonen tragen über Wasserstoffbrückenbindungen noch zu einer hohen Viskosität bei.

DE 10 2005 041954 A1 beschreibt Alkoxysilylgruppen aufweisende Urethanpräpolymere, die allophanat-modifiziert sind und deren Allophanatstruktur einen feuchtigkeitshärtenden silanfunktionellen Rest aufweist.

Silanfunktionelle Urethanpräpolymere, auch silanterminierte Polyurethane genannt, enthalten nach dem Stand der Technik keine freien NCO-Gruppen mehr. Durch Umsetzung mit z.B. Aminogruppen tragenden Alkoxysilanen entstehen Harnstoffgruppen als Bindeglied zwischen dem Präpolymer und den eigentlich angestrebten härtbaren terminalen Alkoxysilylgruppen.

Diesem Gedanken härtbarer terminaler Alkoxysilylgruppen verhaftet, beschreibt Momentive in der US 7,524,915 feuchtigkeitshärtbare Polymere, die erhalten werden durch die Umsetzung von einem oder mehreren Polyetherpolyolen mit einem oder mehreren Polyisocyanaten und einem oder mehreren isocyanatfunktionellen Silanen. Diese Verbindungen sind dadurch charakterisiert, das sich die Silylgruppen lediglich an den Kettenenden des Polymerrückgrats befinden.

Dow Chemical beschreibt in der US 6,162,862 polyfunktionelle flüssige urethanhaltige Addukte, die neben einer Isocyanatfunktion auch eine Silylfunktion enthalten können. Diese Produkte werden durch die Umsetzung eines isocyanathaltigen Intermediates mit einer polyfunktionellen Substanz erhalten. Unter anderen können die isocyanathaltigen Intermediate durch die Umsetzung von Polyethern mit mehrfachfunktionellen Isocyanaten hergestellt werden. Verbleibende Isocyanatfunktionen werden dann mit Substanzen umgesetzt, die zwei oder mehr isocyanat-reaktive Gruppen besitzen. Auf diese Art und Weise sollen zum Beispiel auch Silylgruppen in das Produkt eingebracht werden können. Die erhaltenen Produkte eignen sich zum Beispiel für die Beschichtung von Oberflächen, zum Beispiel als Bestandteil in Farben. Werden nach diesen Verfahren Silylgruppen-haltige Polymere hergestellt, so lassen sich die Silylgruppen nur über die Isocyanatfunktionen anknüpfen.

Den bekannten Verfahren mangelt es daher an der Freiheit, jenseits des bekannten **α,ω**-Funktionalisierungsprinzips Präpolymerstrukturen zugänglich zu machen, die eine molekulare Präsenz härtbarer Gruppierungen (= Summe von Isocyanato- und Silylfunktionen pro Molekül) größer als 2 besitzen und darüber hinaus eine in das Belieben des Synthetikers gestellte Wahlmöglichkeit bieten, das Verhältnis der härtbaren Gruppierungen (Isocyanato-/Alkoxysilylfunktionen) zueinander auf die damit angestrebten anwendungstechnischen Erfordernisse in weiten Bereichen einzustellen.

Darüber hinaus ist es ein dem Fachmann bekannter Mangel, dass konventionelle silylterminierte Polyurethane auf Grund der in ihrem chemischen Aufbau begründeten hohen Viskosität nur eingeschränkt anwendbar sind, wie in US 7,365,145 herausgestellt wird. Dies gilt besonders, wenn im Bereich von Dicht- und Klebstoffsystemen übliche Mengen von 30-50 Gew.-% an anorganischen Füllstoffen wie Calciumcarbonat oder Silikate hinzugefügt werden. Daher werden Polymeren dieses Typs nach Stand der Technik Verdünner zugesetzt. Dies können sowohl reaktive Verdünner, die nicht nur die Viskosität erniedrigen, sondern gleichzeitig die Vernetzungsdichte erhöhen, wie monomere Alkoxysilane, als auch nicht reaktive Verdünner bzw. Lösemittel sein, welche zusätzlich weichmachende Eigenschaften haben können. Ein typischer Vertreter dieser Klasse von silylterminierten Polyurethanen ist z.B. Desmoseal© S XP 2636 von Bayer Material Science mit einer Viskosität von ca. 40.000 mPas (23 °C) .
Mit Hilfe gezielter Allophanatisierung wird nach Stand der Technik versucht, die auf starken intermolekularen Wasserstoffbrücken und dipolaren Wechselwirkungen der Urethan und ggfs. Harnstoffeinheiten miteinander beruhenden hohen Viskositäten entgegen zu wirken, ohne jedoch das Defizit der geringen Vernetzungsdichte beheben zu können.

Die WO 2007/025667 beschreibt modifizierte Alkoxysilangruppen aufweisende Polyurethanpräpolymere, die eine deutlich reduzierte Viskosität aufweisen sollen. Nachteilig ist allerdings die relativ geringe Dichte an vernetzbaren Silangruppen.

Die GB 1 113 228 A offenbart Urethangruppen- und Alkoxysilylgruppen- haltige Reaktionsprodukte, die zur Herstellung von Harzen und Lacken verwendet werden können.

Die WO 2005/078036 A1 offenbart Polyol-basierte Klebstoffe, die durch Reaktion mit Luftfeuchte vernetzen. Sie werden durch Copolymerisation von Propylenoxid mit einem Epoxidgruppen- haltigen Alkoxysilan hergestellt.

Unter Würdigung des hier dargelegten Standes der Technik definiert sich die zu lösende technische Aufgabe darin neuartige urethangruppenhaltige silylierte Präpolymere bereitzustellen, die die beschriebenen Nachteile bekannter Alkoxysilan-modifizierter Polyurethanpräpolymere vermeiden. Gelöst wird die Aufgabe durch neuartige Reaktionsprodukte aus Alkoxysilylverbindungen und Isocyanaten, die einfach, zweifach oder auch mehrfach Isocyanatgruppen tragen können. Bevorzugt trägt die Alkoxysilylverbindung mindestens 1 freie Hydroxylgruppe.

Gegenstand der vorliegenden Erfindung sind urethangruppenhaltige Reaktionsprodukte gemäß Anspruch 1. In einer bevorzugten Ausführungsform trägt die Isocyanatgruppen aufweisende Komponente (a) keine Alkoxysilyl- und/oder Alkylsilylgruppen.

Die neuartigen Alkoxysilyl-modifizierte urethangruppenhaltige Reaktionsprodukte zeichnen sich dadurch aus, dass sie bezogen auf das individuelle Molekül des Reaktionsprodukts im Durchschnitt mehr als 1 Alkoxysilylgruppe pro Urethan- oder deren Reaktionsfolgeprodukte, wie beispielsweise Allophanate und/oder Biuret-Gruppen oder auch Harnstoffgruppen aufweisen.

Bevorzugt werden als Komponente b) Silylverbindungen der Formel 1 mit Index d größer 1, die zusätzlich mindestens eine Hydroxyfunktion aufweisen, eingesetzt.

Die erfindungsgemäßen Reaktionsprodukte stellen neuartige alkoxysilyl-modifizierte und urethangruppenhaltige Verbindungen dar und können als Präpolymere aufgefasst werden. Diese Präpolymere zeichnen sich dadurch aus, dass deren höhere Alkoxysilanfunktionalität und damit Vernetzungsdichte gezielt und in weiten Grenzen eingestellt werden kann und so bei zudem vergleichsweise niedrigeren Viskositäten die Nachteile beschriebener Alkoxysilan-modifizierter Polyurethanpräpolymere vermieden werden können.

Die neuartigen Reaktionsprodukte können wahlweise sowohl über die in ihnen enthaltenen Isocyanatgruppen und/oder Hydroxylgruppen aber auch über die darin inkorporierten Alkoxysilygruppen weitermodifiziert werden.

Tatsächlich können so Präpolymere erhalten werden, die über einen Überschuss an Hydroxylfunktionen und/oder Isocyanatfunktionen neben bereits im Ausgangsmolekül vorhandenen Alkoxysilylgruppen verfügen.

Ein weiterer Gegenstand der Erfindung ist ein technisch einfaches und wirtschaftliches Verfahren zur Herstellung dieser neuen Reaktionsprodukte.

Bei dem Verfahren zur Herstellung von Reaktionsprodukten werden eine oder mehrere alkoxysilylgruppentragende Verbindungen, die zusätzlich mindestens eine Hydroxylgruppe tragen, mit Isocyanaten umgesetzt, gemäß Anspruch 7 . In diesem Verfahren wird eine Silylverbindung der Formel 1 mit Isocyanaten umgesetzt.

Diese Reaktion oder Umsetzung kann kontinuierlich oder batchweise in An- oder Abwesenheit eines Lösungsmittels und in Anwesenheit eines Katalysators durchgeführt werden.

Für den Fachmann vollkommen überraschend, konnten nun sowohl die neuartigen Präpolymeren als auch ein einfacher technischer Weg zu deren Herstellung gefunden werden.
Eine Silylgruppe im Rahmen dieser Erfindung ist dadurch definiert, dass sie neben mindestens einer Alkoxyfunktion ein oder zwei Alkylfunktionen oder ein oder zwei weitere Alkoxyfunktionen an einem Siliciumatom aufweist, wobei die in den Resten vorhandenen organischen oder oxyorganischen Gruppen gleich oder verschieden sein können.

Erfindungsgemäß sind demnach auch die Reaktionsprodukte, bei denen als Komponente (b) eine Silylverbindung 1 der (Formel (1) verwendet werden kann.
Die Herstellung der Silylverbindungen 1 und die einsetzbaren Epoxid-Strukturtypen sind ausführlich in der DE 10 2008 000360 A1 beschrieben und können so beispielsweise durch Alkoxylierung von epoxyfunktionellen (Alkoxy-)Silanen an Doppelmetallcyanid-Katalysatoren hergestellt werden.

Beschrieben wird hierin auch ein Oberflächenmodifizierungsmittel in dem als Komponente (b) ein oder mehrere Silylverbindungen 1 der Formel (1) 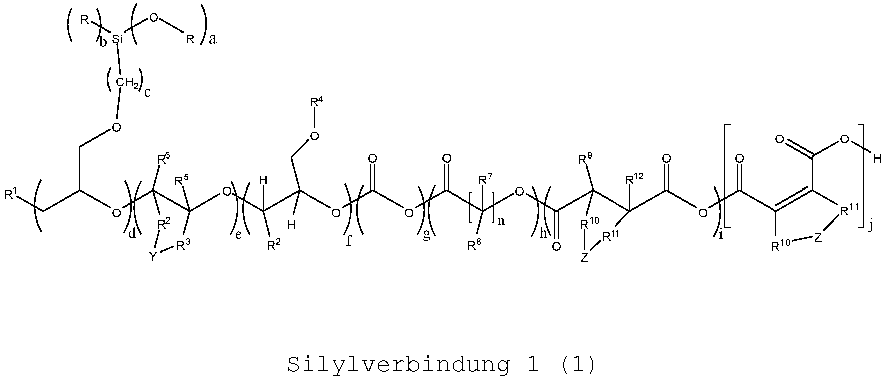 wobei
a eine ganze Zahl von 1 bis 3, vorzugsweise 3 ist,
b eine ganze Zahl von 0 bis 2, vorzugsweise 0 bis 1, besonders bevorzugt 0 ist, und die Summe von a und b gleich 3 ist,
c eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist,
d eine ganze Zahl von 1 bis 500 ist, bevorzugt 1 bis 100, besonders bevorzugt 2 bis 20 und insbesondere bevorzugt 2 bis 10,
e eine ganze Zahl von 0 bis 10.000, bevorzugt 1 bis 2000, besonders bevorzugt 2 bis 2000 und insbesondere 2 bis 500 ist,
f eine ganze Zahl von 0 bis 1.000, bevorzugt 0 bis 100, besonders bevorzugt 0 bis 50 und insbesondere 0 bis 30 ist,
g eine ganze Zahl von 0 bis 1.000, bevorzugt 0 bis 200, besonders bevorzugt 0 bis 100 und insbesondere 0 bis 70 ist,
h, i und j unabhängig voneinander ganze Zahlen von 0 bis 500, bevorzugt 0 bis 300, besonders bevorzugt 0 bis 200 und insbesondere 0 bis 100 sind,
n eine ganze Zahl zwischen 2 und 8 ist,
R einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen; sowie
R¹ ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si und/oder N unterbrochen sein kann, oder ein oxyaromatisches System enthaltender Rest oder vorzugsweise eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste R² oder R³ Wasserstoff. R²-R³ kann eine - CH₂CH₂CH₂CH₂-Gruppe, Y damit eine -(CH₂CH₂-)-Gruppe sein. Die Kohlenwasserstoffreste R² und R³ können ihrerseits weiter substituiert sein und funktionelle Gruppen wie Halogene, Hydroxylgruppen oder Glycidyloxypropylgruppen tragen,
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
R⁷ und R⁸ sind unabhängig voneinander entweder Wasserstoff, Alkyl-, Alkoxy-, Aryl- oder Aralkylgruppen,
R⁹, R¹⁰, R¹¹ und R¹² sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann, mit der Maßgabe, dass die Fragmente mit den Indices d, e, f, und/oder h untereinander frei permutierbar, das heißt innerhalb der Polyetherkette gegeneinander austauschbar sind und wahlweise statistisch verteilt oder blockartig aneinandergereiht vorliegen können und damit in der Sequenz innerhalb der Polymerkette gegeneinander austauschbar sind,
   verwendet wird.

Bevorzugt werden solche Silylverbindungen 1, bei denen die Summe der Fragmente d bis j größer gleich 3 ist, wenn R¹ nur aus einem Monomer oder Oligomer besteht.

Die Verbindungen der Formel (1) werden mangels einer ihre Zusammensetzung dezidiert beschreibenden Nomenklatur im Weiteren als Silylverbindungen 1 bezeichnet, auch wenn die Struktur gegebenenfalls nicht die Merkmale eines polymeren Ethers im üblichen Sinn umfasst. Für den Fachmann ist jedoch die strukturelle Übereinstimmung von Polyetherstrukturelementen mit denen der Silylverbindungen 1 deutlich und klar ersichtlich.

Im Rahmen dieser Erfindung umfasst der Begriff Polyether sowohl Polyether, Polyetherole, Polyetheralkohole, Polyetherester aber auch Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.
Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

R¹ ist ein Fragment, das dem Starter oder den Startverbindungen für die Alkoxylierungsreaktion entstammt gemäß Formel (3)

R¹-H (3)

(das H gehört zur OH-Gruppe eines Alkohols oder einer phenolischen Verbindung), wobei Starter der Formel (3) allein oder in Mischungen miteinander eingesetzt werden können und mindestens eine reaktive Hydroxylgruppe aufweisen; der Starter kann somit auch Wasser sein.

Als OH-funktionelle Startverbindungen R¹-H (3) werden vorzugsweise Verbindungen mit Molmassen von 18 (Wasser) bis 10.000 g/mol, insbesondere 50 bis 2000 g/mol und mit 1 bis 8, bevorzugt mit 1 bis 4 Hydroxylgruppen eingesetzt. Bevorzugt werden als Starter der Formel (3) solche eingesetzt, bei denen R¹ eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, der gegebenenfalls auch durch Heteroatome wie O, S, Si oder N unterbrochen sein kann, oder ein oxyaromatisches System enthaltender Rest; vorzugsweise ist R¹ eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest.
Weiterhin kann R¹-H ein oxyalkylfunktionelles Siloxan oder ein oxyfunktionelles Polyethersiloxan darstellen.
Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Vorzugsweise sind die Verbindungen der Formel (3) ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) oder auch Wasser eingesetzt.
Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen (3) verwendet. Beispielhaft für Verbindungen der Formel (3) seien Wasser, Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.
Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die so hergestellten Verbindungen gewähren die synthetische Freiheit, zwischen Alkoxysilylgruppen aufweisenden Polyoxyalkylenverbindungen zu wählen, die Alkoxysilylfunktionen sowohl terminal, als auch isoliert, blockartig kumuliert als aber auch statistisch eingestreut in die Polyoxyalkylenkette enthalten.

Die Silylverbindungen 1 der Formel (1) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Silylverbindungen der Formel (1) bestehen aus Alkoxysilylgruppen substituierten Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1) und/oder (3).

Je nach verwendetem epoxidfunktionellem Alkoxysilan und evtl. eingesetzten weiteren Monomeren, sowie evtl. auch Kohlendioxid können ester- oder carbonat-modifizierte Silylverbindungen erhalten werden. Bevorzugt ist die Alkoxysilyleinheit in der Verbindung der Formel (1) eine Trialkoxysilyleinheit.

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (1) wiedergegeben sind, solche mit der doppelten, zum Teil dreifachen oder gar vielfachen Molmasse enthalten. Formel (1) gibt mithin die komplexe chemische Realität nur vereinfacht wieder.

Somit stellen die Silylverbindungen 1 Zusammensetzungen dar, die auch Verbindungen enthalten, in denen die Summe der Indices (a) plus (b) in Formel (1) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (1) ausgebildet werden. Diese Reaktion kann mehrfach ablaufen bis z.B. alle RO-Gruppen am Silizium gegen weitere Moleküle der Formel (1) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) sind somit auch nur als Mittelwerte über die verschiedenen, einzeln nicht fassbaren Spezies zu verstehen. Die Vielfalt an chemischen Strukturen und Molmassen spiegelt sich auch in den für Silylverbindungen 1 typischen und für konventionelle DMC-basierende Polyether völlig ungewöhnlichen breiten Molmassenverteilungen von M_{w}/Mₙ von meist > 1,5 wider.

Bei den Methoden des Standes der Technik können nur Silylgruppen-terminierte Präpolymere gebildet werden. Die als Reaktivkomponente erfindungsgemäß eingesetzten Silylverbindungen 1 unterscheiden sich von nach klassischen Methoden modifizierten Oligomeren oder Polymeren darin, dass durch den gezielten Kettenaufbau und die variable Insertion von funktionellen Gruppen in blockartiger aber auch isolierter Weise Strukturen gebildet werden, die sowohl eine Silyl-Funktionalisierung verstreut oder blockartig verteilt über die gesamte Kette aufweisen und zudem zusätzlich aber nicht zwingend erforderlich auch an den Termini eine Silylfunktionalisierung tragen können. Untrennbar mit dem in der Schrift DE 10 2008 000360 A1 dargelegten Verfahren der Alkoxylierung von expoxyfunktionellen Alkoxysilanen verbunden, ist die Besonderheit, dass an den Termini immer eine OH-Funktionalität vorhanden ist, hervorgegangen aus der Epoxidringöffnung des jeweils letzten Epoxidmonomers unter Anknüpfung an das OH-funktionelle Ende der wachsenden Kette. Gerade diese terminale OH-Funktionalität der hier als Reaktivkomponente eingesetzten Silylverbindungen erschließt deren weitere Funktionalisierung mit Isocyanatgruppen aufweisenden Verbindungen unter Bildung einer Urethanverknüpfung.

Als isocyanatgruppenhaltige Verbindungen eignen sich alle bekannten Isocyanate. Bevorzugt im Sinne der erfindungsgemäßen Lehre sind z.B. aromatische, aliphatische und cycloaliphatische Polyisocyanate mit einer zahlenmittleren Molmasse von unter 800 g/mol. So sind beispielsweise geeignet Diisocyanate aus der Reihe 2,4-/2,6-Toluoldiisocyanat (TDI), Methyldiphenyldiisocyanat (MDI), Triisocyanatononan (TIN), Naphthyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethyl-hexamethylendiisocyanat (THDI), Dodecamethylendiisocyanat, 1,4-Diisocyanato-Cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Di-isocyanato-2-methyl-cyclohexan und α,α,α',α'-Tetramethyl-m-oder -p-xylylen-diisocyanat (TMXDI), sowie aus diesen Verbindungen bestehende Gemische.
Bevorzugte Ausgangsstoffe für die Herstellung der urethangruppenhaltigen Verbindungen sind Hexamethylendiisocyanat (HDI), Isophorondiisocyanat (IPDI) und/oder 4,4'-Diisocyanatodicyclohexylmethan.
Ebenfalls geeignet als isocyanathaltige Ausgangskomponenten sind Umsetzungsprodukte der zuvor erwähnten Isocyanate mit sich selbst oder untereinander zu Uretdionen oder Isocyanuraten. Beispielhaft seien genannt Desmodur® N3300, Desmodur® N3400 oder Desmodur® N3600 (alle BayerMaterialScience, Leverkusen,DE).
Weiterhin geeignet sind auch Derivate von Isocyanaten, wie Allophanate oder Biurete. Beispielhaft genannt seien Desmodur® N100, Desmodur® N75MPA/BA oder Desmodur® VPLS2102 (alle BayerMaterialScience, Leverkusen,DE).
Werden derartige Polyisocyanate mit Silylpolyethern umgesetzt, welche mehr als eine reaktive OH-Gruppe im Molekül aufweisen, werden, so werden lineare oder verzweigte Copolymere gebildet, in denen die Silylpolyether- und Isocyanatfragmente alternierend über Urethangruppen miteinander verknüpft sind. Wird die Isocyanatkomponente im molaren Überschuss bezüglich der Silylpolyetherkomponente eingesetzt, so entstehen endständig NCO-Gruppen tragende reaktive Präpolymere mit zusätzlicher Alkoxysilylfunktionalität.

Ein weiterer Gegenstand der Erfindung ist somit ein Verfahren zur Herstellung von urethanisierten Polyolen mit terminalen Isocyanat-Gruppen, bei dem die Umsetzung mit einem molaren Überschuss der Komponente (a) bezogen auf die Komponente (b) durchgeführt wird.

In einer besonderen Ausführungsform der vorliegenden Erfindung ist somit durch Weiterreaktion an den Urethangruppen mit im molaren Überschuss vorhandenen Isocyanaten der Aufbau von Allophanatstrukturen möglich, wodurch zusätzliche Verzweigungen in das Gerüst der Präpolymeren eingebaut werden können.

Ein weiterer Gegenstand der Erfindung ist somit ein Verfahren zur Herstellung von alkoxysilymodifizierten Allophanaten bei dem die Isocyanatkomponente (Komponente (a)) im molaren Überschuss bezogen auf die Komponente (b) eingesetzt wird.

In einer weiteren Ausführungsform der vorliegenden Erfindung ist es andererseits möglich bei Einsatz eines Überschusses der Silylverbindung Alkoxysilylgruppen tragende urethanisierte Polyole mit terminalen OH-Gruppen herzustellen.
Ein weiterer Gegenstand der Erfindung ist somit ein Verfahren zur Herstellung von urethanisierten Polyolen mit terminalen OH-Gruppen bei dem die Umsetzung mit einem molaren Überschuss der Komponente (b) bezogen auf die Komponente (a) durchgeführt wird.

Die Silylverbindungen 1 können nach erfindungsgemäßem Verfahren auch mit monofunktionellen Isocyanaten modifiziert werden. Im einfachsten Fall werden dabei Alkyl-, Aryl-, Arylalkylisocyanate mit den OH-Gruppen der Silylverbindung unter Bildung des jeweiligen Addukts und gleichzeitigem Endverkappen des reaktiven Kettenendes der eingesetzten Silylverbindung umgesetzt. Hierfür eignen sich z.B. Methyl-, Ethyl-, Butyl-, Hexyl-, Octyl-, Dodecyl-, Stearylisocyanat.

Besonders geeignete monofunktionelle Isocyanate sind solche, die ihrererseits vernetzbare Alkoxysilylgruppen im Molekül tragen. Hierzu gehören bevorzugt Isocyanatoalkyltrialkoxysilane und Isocyanatoalkylalkyldialkoxysilane.

Als geignete alkoxysilanfunktionelle Monoisocyanate können Isocyanatotrimethoxysilan, Isocyanatomethyltriethoxysilan, (Isocyanatomethyl)methyldimethoxysilan, (Isocyanatomethyl)methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan eingesetzt werden. Bevorzugt ist hier die Verwendung von 3-Isocyanatopropyltrimethoxysilan und - triethoxysilan.

Auf diesem chemischen Wege lassen sich endständig um jeweils eine zusätzliche Alkoxysilylgruppe bereicherte modifizierte Silylverbindungen gewinnen. Die Umsetzung der alkoxysilanfunktionellen Monoisocyanate ist bislang nur von konventionellen OH-funktionellen Polymeren wie Polyethern bekannt, die selbst keine Alkoxysilylgruppen aufweisen. Derartige Produkte und Verfahren werden z.B. in den nachfolgend aufgeführten Schriften beschrieben.

Die JP 11021463 stellt auf ein Verfahren zur Herstellung trialkoxysilylterminierter Polyoxyalkylenether ab, die sich von Glycerin als trifunktionellem Alkohol herleiten, indem die jeweiligen Glycerinpolyethertriole mit Isocyanatgruppen tragenden Trialkoxysilanen unter urethanisierender Verknüpfung modifiziert werden.

JP 08295805 beansprucht ein im Wesen vergleichbares Verfahren, das die Trialkoxysilylmodifizierung von via DMC-Katalyse hergestellten Dipropylenglycolpolyetherdiolen mit Isocyanatgruppen tragenden Trialkoxysilanen umfasst.

Für den Fachmann vollkommen überraschend ist die Beobachtung, dass die sich aus der Umsetzung von Silylverbindungen der Formel (1) mit Isocyanatgruppen aufweisenden Verbindungen ableitenden erfindungsgemäßen Polyurethan-Präpolymeren erstaunlich niedrige Viskositäten aufweisen im unmittelbaren Vergleich mit Molekulargewichtsanalogen Verbindungen des Standes der Technik, wie sie z.B. für die Desmoseal®-Produkte in einer Broschüre der Bayer MaterialScience mit dem Titel "Prepolymers: Products and Applications", http://www.bayercoatings.de/BMS/DB-RSC/BMS_RSC_CAS.nsf/files/Broschueren/$file/MS00030480-E_ECS_Prepolymer_04_08.pdf, Seite 18, offenbart sind. Dort sind Viskositäten von 35.000 mPas angegeben.

Die hier beschriebenen neuartigen Systeme und Verbindungen lassen sich mit weiteren reaktiven Komponenten zu Copolymerisaten umsetzen. Dabei ist das stöchiometrische Verhältnis der NCO-Komponente beziehungsweise der OH-Komponente ausschlaggebend für die möglichen Weiterreaktionen. So können Umsetzungsprodukte erhalten werden, indem ein oder mehrere Silylverbindungen 1 mit weiteren reaktiven Komponenten, insbesondere solchen, die funktionelle Gruppen mit protischem Wasserstoff besitzen wie beispielsweise mit ein oder mehreren mehrfachfunktionellen Isocyanaten und zusätzlich weiteren Stoffen mit isocyanatgruppen- und/oder mit ein oder mehreren hydroxylgruppen-reaktiven Verbindungen umgesetzt werden.
Beispielsweise können Hydroxyverbindungen wie beispielsweise Wasser, ein- oder mehrwertige Alkohole, Amine, Thiole, Alkoxysilane, Aminoalkoxysilane, organische Säurechloride, Isocyanate, Diisocyanate, Polyisocyanate, organische Alkoxylate, fluororganische Hydroxyverbindungen, insbesondere fluororganische Hydroxyverbindungen, etc. auf diese Weise als zumindest dritte Komponente, vor, während oder nach der primär beschriebenen Reaktion eingebracht werden, um damit besondere Eigenschaften des Präpolymers einzustellen oder zu betonen. Auf diese Art und Weise lassen sich gegebenenfalls weitere funktionelle Gruppen in das Molekül einbringen.
Auch besteht damit die Möglichkeit, gezielt die Molmasse und/oder die Viskosität der Produkte zu beeinflussen. So lassen sich mittlere Molmassen in einem weiten Bereich von 500 g/mol bis über 100.000 g/mol realisieren.

Weitere Stoffe mit isocyanatreaktiven Gruppen sind zum Beispiel ein- oder mehrfachfunktionelle Alkohole, wie Methanol, Ethanol, Butanol, Glycerin, Trimethylolpropan, 2-Ethylhexylalkohol oder fluorierte Alkohole wie 2,2,2-Trifluorethanol, Diole, Polyole oder acrylierte Alkohole, wie Hydroxyethylacrylat, Hydroxypropylacrylat, Hydroxybutylacrylat oder Polyetherdiole oder Polyesterdiole oder Polytetrahydrofuran ebenso wie Siliconpolyethercopolymere, die OH-funktionelle Polyetherreste aufweisen.
Weitere Stoffe mit isocyanatreaktiven Gruppen sind zum Beispiel alle Mono-, Di- und Polyamine wie Stearylamin, Ethylamin, Isophorondiamin sowie aminofunktionelle Polymere wie Polyether und Polysiloxane, oder Diethanolamin, Aminoalkoxysilane, wie beispielsweise 3-Aminopropyltrialkoxysilane.

Ein weiterer Gegenstand der Erfindung ist somit ein Verfahren zur Herstellung von Urethangruppen enthaltenden Präpolymer-Zusammensetzungen, enthaltend Reaktionsprodukte aus Silylverbindungen 1 gemäß der Schrift DE 10 2008 000360 A1 mit Isocyanat-Gruppen tragenden Verbindungen.

Gegenstand der Erfindung ist weiterhin ein Verfahren zur Herstellung von urethangruppenhaltigen silylierten Polymeren, dadurch gekennzeichnet, dass ein oder mehrere Isocyanate mit ein oder mehreren Silylpolyethern 1 im Temperaturbereich von -15 °C bis 220 °C, bevorzugt zwischen +15°C bis 180°C und insbesondere zwischen +30 bis 150°C, umgesetzt werden.

Zur Herstellung der Präpolymer-Zusammensetzungen werden ein oder mehrere Silylverbindungen 1 mit einem oder mehreren Isocyanaten zusammengebracht und gegebenenfalls mit weiteren Stoffen mit isocyanatgruppenreaktiven und/oder hydroxylgruppenreaktiven Gruppen bei -15 °C bis 220 °C, bevorzugt zwischen +15°C bis 180°C und insbesondere zwischen +30 bis 150°C, gegebenenfalls in Anwesenheit eines Katalysators umgesetzt. Dabei kann es gegebenenfalls sinnvoll sein, ein oder mehrere Lösemittel oder andere nicht reaktive Komponenten, wie beispielsweise Füllstoffe, Emulgatoren und/oder Entschäumer zuzusetzen.

Die Reaktion kann einphasig in Lösung oder im mehrphasigen System einer Emulsion und/oder Suspension durchgeführt werden.

Geeignete Lösemittel sind zum Beispiel aromatische Lösemittel, wie Toluol oder Xylol, aliphatische Lösemittel, wie Pentan oder Cyclohexan, oder Ether wie zum Beipiel THF.

Geeignete Emulgatoren sind zum Beispiel alkoxylierte Fettalkohole oder Polyethersiloxane.

Bei der Durchführung des erfindungsgemäßen Verfahrens können der oder die Silylverbindungen dem Isocyanat bzw. den Isocyanaten zugegeben werden oder umgekehrt. Durch die Variation in der Dosierreihenfolge der einzelnen Komponenten lässt sich die Reaktion gezielt steuern. Zudem eignen sich auch kontinuierlich betriebene Reaktoren zur Darstellung der erfindungsgemäßen Urethangruppen haltigen silylierten Polymere.

Häufig ist es sinnvoll, die Mischung der Edukte während der Reaktionsphase zu rühren, aber auch andere Methoden zur Durchmischung, wie zum Beispiel ein Umpumpen wären zweckmäßig.

Die Reaktionsbedingungen, bei denen die Silylverbindungen 1 mit Isocyanaten zur Reaktion gebracht werden, hängen von einer Reihe verschiedener Parameter ab. So zeigen aromatische Isocyanate in der Regel eine höhere Reaktivität im Vergleich zu aliphatischen Isocyanaten, was dazu führt, dass bei aliphatischen Isocyanaten höhere Reaktionstemperaturen zur Umsetzung notwendig sind. Die Reaktionsgeschwindigkeit hängt zum Beispiel von der Temperatur, der Art der Edukte, der Anwesenheit eines Katalysators sowie der Anwesenheit eines Lösemittels ab. Die Reaktionsbedingungen beeinflussen jedoch auch die Produkteigenschaften, da je nach Bedingungen Nebenreaktionen, wie zum Beispiel die Allophanatbildung, im unterschiedlichen Ausmaß stattfinden.

Gegebenfalls ist es sinnvoll, die Temperatur während der Reaktion zu ändern und zum Beispiel ein Temperaturprofil zu wählen.

Es gibt eine Reihe von Katalysatoren, die sich für die Beschleunigung der Umsetzung von Isocyanaten und Silylverbindungen 1 eignen. Zum Beispiel lassen sich Amine, wie 1,4-Diazabicyclo-(2,2,2)-octan, N,N-Diethylcyclohexyl-amin, N-Methyl-morpholine, N,N,N',N'-tetramethylmethan-diamin, Tetraalkylammoniumverbindungen, N,N,N-Trimethyl-N-2-hydroxypropylammoniumhydroxid, N,N,N-Trimethyl-N-2-hydroxypropylammonium-2-ethylhexanoat, Cholin-2-ethylhexanoat oder Metallverbindungen wie Di-n-butyl-zinndilaurate, Zinnoctoat, Zinn-2-ethylhexanoat, Zinkoctoat, Zink-2-ethylhexanoat, Zinkacetylacetonat, Zink-2-ethylcaproat, Wismutnitrat, Blei-2-ethylhexanoat, Eisenchlorid, Tetrabutyltitanat oder Wismutoctoate, allein oder in beliebigen Mischungen miteinander, einsetzten. In vielen Fällen zeigt sich auch eine synergistische Wirkung, wenn zwei verschiedene Katalysatoren zusammen eingesetzt werden. Geeignete Mischungen an Katalysatoren sind zum Beipiel die Kombination Dibutylzinnlaurat und Tetramethylbutandiamin, Zinnoctoat und Tetramethylbutandiamin oder Zinnoctoat und 1,4-Diazabicyclo-[2,2,2]-octan. Des Weiteren eignen sich LewisSäuren als Katalysator. Der Gehalt an Katalysator liegt bei 0,0001 bis 10 Gew.-%, bevorzugt im Bereich 0,001 bis 5 Gew.-%, jeweils bezogen auf die eingesetzte Silylpolyethermenge.
Im Rahmen des erfindungsgemäßen Verfahrens werden die OH-Funktionen der Silylverbindungen 1 teilweise oder vollständig mit Isocyanatgruppen umgesetzt.

Sollen Polymere hergestellt werden, die noch reaktive NCO-Gruppen aufweisen, so ist es notwendig, mindestens ein mehrfachfunktionelles Isocyanat einzusetzen und die NCO-Funktionalitäten nicht komplett umzusetzen, bzw. einen Überschuss an NCO-Funktionen bezogen auf die OH-Funktionen einzusetzen. Gegebenenfalls ist zu beachten, dass ein Teil der NCO-Funktionen durch Nebenreaktionen umgesetzt wird, zum Beispiel bei der Bildung von Allophanaten.

Weitere Stoffe mit isocyanatfunktionellen Gruppen können bereits während der Umsetzung der Silylverbindungen 1 mit mindestens einem mehrfachfunktionellen Isocyanat zugesetzt werden, um diese direkt in das Polymer mit einzubauen. Sie können aber auch mit überschüssigen Isocyanatgruppen im Anschluss an die Umsetzung der Silylverbindungen 1 mit mindestens einem mehrfachfunktionellen Isocyanat umgesetzt werden.

Wird die Isocyanatkomponente in einem stöchiometrischen Überschuss gegenüber den OH-Gruppen der Silylverbindung 1 eingesetzt, so werden gleichzeitig NCO- und Alkoxysilylgruppen tragende Präpolymere erhalten. Derartige Dual-Cure Systeme lassen sich nach zwei verschiedenen Mechanismen und in ihrer Reaktivität abgestuft zur Aushärtung bringen.

Die erfindungsgemäßen urethanisierten und silylierten Polymere enthaltenden Zusammensetzungen können weitere reaktive Gruppen tragende Komponenten enthalten. Hierzu gehören alle Verbindungen mit mindestens einer Isocyanat-, Hydroxy-, Epoxy- und ungesättigter C=C-Gruppe wie z.B. Acrylate, Methacrylate, Vinyl-, Allyl-Verbindungen.

Ein weiterer Gegenstand der Erfindung sind daher Zusammensetzungen enthaltend mindestens ein oder mehrere erfindungsgemäße (präpolymere) urethangruppenhaltige Reaktionsprodukte und weitere Verbindungen mit mindestens einer Isocyanat-, Hydroxy-, Epoxy- und ungesättigten C=C-Gruppe wie z.B. Acrylate, Methacrylate, Vinyl-, Allyl-Verbindungen und/oder reaktive Silane oder silylfunktionelle Verbindungen.

Weitere Folgeprodukte, die aus den Zusammensetzungen zugänglich sind und die beispielsweise dann über Harnstoffgruppen, Biuretstrukturen oder Allophanatstrukturen verfügen, sind ausdrücklich mit umfasst.

Als reaktive Silane können die erfindungsgemäßen Zusammensetzungen beispielsweise andere, vorzugsweise Alkoxysilane enthalten. Diese Alkoxysilane können sowohl monomere Silane wie die der Formel (4) als auch polymergebundene Silane sein,

UₓSiV₍₄₋ₓ₎ (4)

wobei U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxygruppen und x = 1, 2, 3 oder 4 darstellen.
Hydrolysierbar bedeutet im Rahmen dieser Erfindung, dass mindestens 80 % der Gruppen unter den gewählten Bedingungen hydrolysiert und damit abgespalten werden können.

Die hydrolysierbaren Gruppen V sind beispielsweise H, Halogen-, Alkoxy-, bevorzugt Methoxy-, Ethoxy-, i-Propoxy-, n-Propoxy- oder Butoxy-, Aryloxy-, (bevorzugt Phenoxy-, Acyloxy-, bevorzugt Acetoxy- oder Propionyloxy-, Acyl-, bevorzugt Acetyl-, Amino-, Monoalkylamino- oder Dialkylamino-Gruppen. Der nicht hydrolysierbare Rest U kann beispielsweise ein Alkyl-, Alkenyl-, Alkinyl-, Aryl-, Alkylaryl- oder Aralkyl-Rest sein. Die Alkylkette kann 0 bis 50, vorzugsweise 0 bis 22 Kohlenstoffatome aufweisen und auch durch Heteroatome wie Sauerstoff oder Stickstoff oder Schwefel unterbrochen sein oder auch ein Siliconrest sein. Der aromatische Rest kann auch heteroaromatisch sein. Die Reste U und V können ggf. einen oder mehrere übliche Substituenten, wie beispielsweise Halogen oder Alkoxy aufweisen.

Nicht hydrolysierbare Reste U nach der Formel (4) mit funktionellen Gruppen können ausgewählt werden aus dem Bereich der Glycidyl- oder Glycidyloxyalkylen-Reste, wie beispielsweise β-Glycidyl-oxyethyl, γ-Glycidyloxypropyl, δ-Glycidyloxypropyl, ε-Glycidyloxypentyl, ω-Glycidyloxyhexyl oder 2-(3,4-Epoxycyclohexyl)ethyl, der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl oder Acryloxybutyl, und dem 3-Isocyanatopropyl-Rest, und/oder cyclische und/oder lineare (poly)urethangruppen-haltige und/oder harnstoffhaltige und/oder (poly)aminogruppenhaltiger Rest.

Besonders verbreitet ist der Einsatz von niedrig viskosen, monomeren Trimethoxysilyl- und Triethoxysilylgruppen tragenden Verbindungen, die in Gegenwart von Luftfeuchtigkeit und geeigneten Katalysatoren zumeist schon bei Raumtemperatur in der Lage sind, unter Abspaltung der Alkoxygruppen und Ausbildung von Si-O-Si-Bindungen miteinander zu kondensieren. Solche organofunktionellen monomeren Silane sind zum Beispiel N-Cyclohexylaminomethyltrimethoxysilan, N-Cyclohexyl-3-aminopropyl-triethoxysilan, 3-Aminopropyltrimethoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan und Hexadecyltrimethoxysilan. Dem Fachmann ist die Methodik im Wesentlichen bekannt.

Die erfindungsgemäßen Urethangruppen aufweisenden silylierten Polymere lassen sich ebenfalls in Mischungen oder Zusammensetzungen mit allen silylfunktionellen Verbindungen, die mindestens eine chemisch an ein Polymergerüst gebundene Alkoxysilylgruppe aufweisen, einsetzen. Derartige Silan-modifizierte Polymere sind Silanverbindungen des Typs der Formel (5) 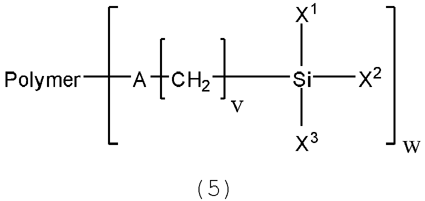 wobei
X¹, X² und X³ unabhängig voneinander Alkyl- oder Alkoxyreste mit 1-8 C-Atomen sind,
A einen Carboxy-, Carbamat-, Amid-, Carbonat-, Ureido-oder Sulfonatgruppe enthaltenden Rest darstellt oder ein Sauerstoffatom bedeutet,
w eine ganze Zahl von 1 bis 8 ist und
v eine ganze Zahl von 1 bis 20, bevorzugt 1 bis 15 und insbesondere 1 bis 5 ist.
Der Polymerrest ist ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten.
Zu den bevorzugt in Mischungen mit den Urethangruppen aufweisenden Silylpolymeren eingesetzten Polymeren der Formel (5) zählen sogenannte α-Silan-terminierte Polymere, deren reaktive Alkoxysilylgruppen nur durch eine Methyleneinheit (v = 1) von einer Stickstoff-haltigen Polymer-gebundenen Gruppe A getrennt ist, wie in WO 2005/100482 und EP-A1-1 967 550 beschrieben.
Weitere erfindungsgemäß in härtbaren Zusammensetzungen einsetzbare Silanpolymere der Formel (5) sind solche, in denen die Silangruppen terminal über eine Propyleneinheit (v = 3) an ein Polymergerüst gebunden ist und bei denen A eine Urethangruppe darstellt. Bevorzugt sind dabei Polyalkylenoxide, speziell Polypropylenglykole (w = 2), mit Silanfunktionen an jedem der beiden Kettenenden, wie in EP-A1-1 824 904 beschrieben.
Ebenso als Mischungsbestandteile geeignete Verbindungen der Formel (5) sind Silan-terminierte Polyurethane, deren Herstellung aus einem Polyol durch Umsetzung mit einem Diisocyanat und anschließend mit einem aminofunktionellen Alkoxysilan z.B. in US 7,365,145, US 3,627,722 oder US 3,632,557 beschrieben wird. Die Bindegruppe A ist dabei ein Urethan- und Harnstoffgruppen tragender Rest.

Weitere im Sinne der Erfindung einsetzbare Polymere sind Urethan- und Harnstoff-freie silylterminierte Polyether der Formel (5) mit A gleich Sauerstoff, in denen die terminalen Alkoxysilylgruppen über eine Etherfunktion direkt an das Polymergerüst angebunden sind. Derartige Silylpolymere sind in US 3,971,751 beschrieben. Sie bestehen bevorzugt aus einem Polyethergrundgerüst, wobei v in Formel (5) bevorzugt den Wert 3 und w bevorzugt den Wert 2 hat, und sind als MS Polymer©-Produkte von Kaneka erhältlich.
Auch Alkoxysilylgruppen tragende Polysiloxane wie z.B. in WO 2007/061847 beschrieben, sind mit den erfindungsgemäßen urethanisierten und silylierten Polymeren kombinierbar.

Es ist generell dem Experten überlassen, die für das erwünschte Eigenschaftsprofil geeigneten Komponenten auszuwählen, um optimiert angepasste Copolymersysteme zu erzeugen. Es steht mithin durch die erfindungsgemäßen Zusammensetzungen ein Baukasten unterschiedlicher Eigenschaftsprofile zur Verfügung, aus dem sich anwendungsgerecht eine optimierte Zusammenstellung auswählen lässt.

Das erfindungsgemäße Einbringen von Urethangruppen in die Präpolymerstruktur gestattet es, die von den reinen Polyurethanen bekannten guten Haftungseigenschaften auf diversen Untergründen, die hohe Beständigkeit gegenüber Lösemitteln, Chemikalien und Witterungseinflüssen sowie ihre hohe mechanische Flexibilität mit den Vorzügen härtbarer Silylpolyether zu kombinieren.

Überraschenderweise sind hier selbst mit beachtlicher Alkoxysilyl-Funktionalisierungsdichte ausgestattete urethanisierte Silylpolyether-Isocyanat-Addukte zumeist niedrigviskose, gut handhabbare Flüssigkeiten, so dass auch im Falle angestrebter hochvernetzter, gut haftender Klebeverbindungen keinerlei Einschränkungen im Hinblick auf die Dosierung dieser Komponente zu verzeichnen sind. Diese Beobachtung differenziert die erfindungsgemäße Lehre von der in der WO 2008/058955 dargelegten Vorgehensweise, die auf das Einbringen freier Silanmonomerer als Formulierungsbestandteile in den Endrezepturen abstellt, um zu gewährleisten, dass die notwendige Vernetzungsdichte bei gleichzeitig niedriger Verarbeitungsviskosität erzielt wird. Die im Hinblick auf ihre strukturelle Vielfalt kaum einzugrenzenden Alkoxysilylgruppen aufweisenden Präpolymere eröffnen dem in der Polymerchemie vertrauten Fachmann durch den Einbau z.B. von Ester-, Carbonat- und aromatischen Strukturelementen bereits eine Gestaltungsfreiheit, die nahezu beliebige anwendungstechnische Bedürfnisse adressiert.

Weitere Gegenstände der Erfindung werden durch die Ansprüche beschrieben, deren Offenbarungsgehalt vollumfänglich Bestandteil dieser Beschreibung ist.

Die erfindungsgemäßen Urethangruppen enthaltenden silylierten Reaktionsprodukte und Präpolymere und das Verfahren zu deren Herstellung werden nachfolgend beispielhaft beschrieben, ohne dass die Erfindung als auf diese beispielhaften Ausführungsformen beschränkt angesehen werden kann.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgenden Beispielen wurden die folgenden Trialkoxysilylgruppen enthaltenden Silylverbindungen 1 eingesetzt, die gemäß der Schrift DE 10 2008 000360 A1 nach dem Verfahrensprinzip der DMC-katalysierten Alkoxylierung von 3-Glycidyloxypropyltriethoxysilan (Dynasylan® GLYEO) der Evonik Degussa GmbH hergestellt worden sind. PO bedeutet Propylenoxid.

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.
Die Viskositäten wurden in Anlehnung an die DIN 53019 mit einem Rotationsviskosimeter der Marke Brookfield (Model LVT) bei 25°C gemessen.

Der NCO-Gehalt in Prozent wurde über Rücktitration mit 0,1 molarer Salzsäure nach Reaktion mit Butylamin gemäß DIN EN ISO 11909 bestimmt.

### Trialkoxysilylpolyether SP-1:

### Fast farbloser, niedrigviskoser Silylpolyether mit vierfacher Trialkoxysilanfunktionalität

Chemischer Aufbau gemäß Monomerendosage:
Polypropylenglykolmonobutylether (400 g/mol) + 2 mol PO + (21 mol PO / 4 mol GLYEO statistisch) + 2 mol PO, theoretische mittlere Molmasse 3.090 g/mol,
Mittlere Molmasse M_{w} 2.760 g/mol, Polydispersität M_{w}/Mₙ 1,38, Viskosität (25 °C) 365 mPa*s.

### Trialkoxysilylpolyether SP-2:

### Fast farbloser, niedrigviskoser Silylpolyether mit vierfacher Trialkoxysilanfunktionalität

Chemischer Aufbau gemäß Monomerendosage:
Polypropylenglykol (2.000 g/mol) + 17 mol PO + (103 mol PO / 4 mol GLYEO statistisch), theoretisches Molgewicht 10.000 g/mol,
Mittlere Molmasse M_{w} 10.900 g/mol, Polydispersität M_{w}/Mₙ 2,16, Viskosität (25 °C) 5.050 mPa*s.

### Trialkoxysilylpolyether SP-3:

### Fast farbloser, niedrigviskoser Silylpolyetherester mit vierfacher Trialkoxysilanfunktionalität

Chemischer Aufbau gemäß Monomerendosage:
Polypropylenglykol (700 g/mol) + 6 mol Hexahydrophthalsäureanhydrid + 10 mol PO + 4 mol GLYEO (blockweise)
Mittlere Molmasse M_{w} 3.400 g/mol, Viskosität (25 °C) 5.000 mPa*s.

### Trialkoxysilylpolyether SP-4:

### Niedermolekularer, Octanol-gestarteter, fast farbloser und niedrig viskoser blockartig aufgebauter Polyether mit siebenfacher Trialkoxysilanfunktionalität

Chemischer Aufbau gemäß Monomerendosage:
1-Octanol + 8 mol PO + 3,5 mol GLYEO + 8 mol PO + 3,5 mol GLYEO + 2 mol PO
Mittlere Molmasse 3100 g/mol, OH-Zahl 19,5 mg KOH/g, Viskosität (25,0 °C): 190 mPa.s.

Zur Berechnung der Ansätze wurde das theoretische Molgewicht der Trialkoxysilylpolyether herangezogen.

### Beispiel 1:

### Herstellung eines NCO- und urethangruppenhaltigen Silylpolyethers

150,2 g (49 mmol entspricht 49 mmol OH-Funktionen) des Silylpolyethers SP-1 wurden in einen 250 mL Dreihalskolben mit Rückflußkühler, Thermometer und KPG-Rührer vorgelegt. Anschließend wurden 10,8 g Isophorondiisocyanat -IPDI (49 mmol entspricht 98 mmol NCO-Funktionen) langsam bei Raumtemperatur zudosiert und die Mischung mit 0,08 g Dibutylzinndilaurat versetzt. Das Reaktionsgemisch wurde auf 60 °C erwärmt und eine Stunde bei dieser Temperatur gerührt. Man erhielt ein klares Produkt mit einer Viskosität von 760 mPa s und einem NCO-Wert von w(NCO) = 1,26 %.

Die Einwaage an dem Isophorondiisocyanat wurde so gewählt, dass die NCO-Gruppen im Überschuss bezüglich der OH-Gruppen des Silylpolyethers SP-1 vorliegen, so dass sich Produkte bilden, die neben den Alkoxysilylgruppen auch noch freie NCO-Gruppen tragen.

### Beispiel 2:

### Herstellung eines urethangruppenhaltigen Silylpolyethers

100 g des Silylpolyethers SP-1 (32 mmol entspricht 32 mmol OH-Funktionen) wurden in einen 250 mL Dreihalskolben mit Rückflußkühler, Thermometer und KPG-Rührer vorgelegt. Anschließend wurden 3,6 g Isophorondiisocyanat (16 mmol entpricht 32 mmol NCO-Funktionen) langsam bei Raumtemperatur zudosiert und die Mischung mit 0,05 g Dibutylzinndilaurat versetzt. Das Reaktionsgemisch wurde auf 60 °C erwärmt und zwei Stunden bei dieser Temperatur gerührt. Man erhielt ein klares Produkt mit einer Viskosität von 880 mPa*s und einem NCO-Wert von w(NCO) = 0 %.

Die Einwaage des Isophorondiisocyanats wurde so gewählt, dass die OH Gruppen des Silylpolyethers im equimolarem Verhältnis zu den NCO-Funktionen vorliegen, so dass Polyether miteinander verknüpft werden und sich höhermolekulare Polyether bilden.

### Beispiel 3:

### Herstellung eines urethangruppenhaltigen Silylpolyethers mit einer Alkylendgruppe

100 g des Silylpolyethers SP-1 (32 mmol entspricht 32 mmol OH-Funktionen) wurden in einen 250 mL Dreihalskolben mit Rückflußkühler, Thermometer und KPG-Rührer vorgelegt. Anschließend wurden 9,56 g Stearylisocyanat (32 mmol entspricht 32 mmol NCO-Funktionen) langsam bei Raumtemperatur zudosiert und die Mischung mit 0,05 g Dibutylzinndilaurat versetzt. Das Reaktionsgemisch wurde auf 100 °C erwärmt und eine Stunde bei dieser Temperatur gerührt. Man erhielt ein bei Raumtemperatur trübes Produkt mit einer Viskosität von 455 mPa*s und einem NCO-Wert von w(NCO) = 0 %.

Die Einwaage des Stearylisocyanats wurde so gewählt, dass die OH Gruppen des Silylpolyethers im equimolarem Verhältnis zu den NCO-Funktionen vorliegen, so dass die OH-Gruppen möglichst vollständig verbraucht werden und die Polyether mit einer Stearylgruppe modifiziert sind.

### Beispiel 4:

### Herstellung eines urethangruppenhaltigen Silylpolyethers mit einer Triethoxysilyl-Endgruppe

100 g des Silylpolyethers SP-1 (32 mmol entspricht 32 mmol OH-Fuktionen) wurden in einen 250 mL Dreihalskolben mit Rückflußkühler, Thermometer und KPG-Rührer vorgelegt. Anschließend wurden 8,0 g 3-Isocyanatopropyltriethoxysilan (32 mmol entspricht 32 mmol NCO-Funktionen) langsam bei Raumtemperatur zudosiert. Die Mischung wurde auf 80 °C erwärmt und mit 0,05 g Dibutylzinndilaurat versetzt. Das Reaktionsgemisch wurde eine Stunde bei dieser Temperatur gerührt. Man erhielt ein bei Raumtemperatur klares Produkt mit einer Viskosität von 800 mPa*s und einem NCO-Wert von w(NCO) = 0 %.

Die Einwaage des Isocyanatopropyltriethoxysilans wurde so gewählt, dass die OH Gruppen des Silylpolyethers im equimolarem Verhältnis zu den NCO-Funktionen vorliegen, so dass die OH-Gruppen möglichst vollständig verbraucht werden und die Polyether mit weiteren Triethoxysilylgruppen modifiziert werden.

### Beispiel 5:

### Herstellung eines urethangruppenhaltigen Silylpolyethers mit Desmodur N 3300

100 g des Silylpolyethers SP-1 (32 mmol entspricht 32 mmol OH-Funktionen) wurden in einen 250 mL Dreihalskolben mit Rückflußkühler, Thermometer und KPG-Rührer vorgelegt. Anschließend wurden 6,25 g Desmodur N 3300 (w(NCO) = 21,8 % entspricht 32 mmol NCO-Funktionen) der Firma Bayer (aliphatisches Polyisocyanat, HDI-Trimer) langsam bei Raumtemperatur zudosiert. Die Mischung wurde auf 80 °C erwärmt und mit 0,05 g Dibutylzinndilaurat versetzt. Es setzte eine exotherme Reaktion ein, bei der sich das Reaktionsgemisch auf 105 °C erwärmte. Das Reaktionsgemisch wurde anschließend bei 80 °C eine Stunde gerührt. Man erhielt ein bei Raumtemperatur klares Produkt mit einer Viskosität von 1.665 mPa*s und einem NCO-Wert von w(NCO) = 0 %.

Die Einwaage des Desmodur® N 3300 wurde so gewählt, dass die OH Gruppen des Silylpolyethers im equimolarem Verhältnis zu den NCO-Funktionen vorliegen, so dass die OH-Gruppen möglichst vollständig verbraucht werden und Polyether miteinander verknüpft werden, so dass ein verzweigter Silylpolyether gebildet wird.

### Beispiel 6:

### Herstellung eines urethangruppenhaltigen Silylpolyethers mit IPDI - Isophorondiisocyanat

100 g des Silylpolyethers SP-2 (10 mmol entspricht 20 mmol OH-Funktionen) wurden in einen 250 mL Dreihalskolben mit Rückflußkühler, Thermometer und KPG-Rührer vorgelegt. Anschließend wurden 1,48 g Vestanat IPDI (6,7 mmol entspricht 13,4 mmol NCO-Funktionen) der Firma Evonik Degussa GmbH (aliphatisches Isocyanat) langsam bei Raumtemperatur zudosiert. Die Mischung wurde auf 80 °C erwärmt und mit 0,05 g Dibutylzinndilaurat versetzt. Das Reaktionsgemisch wurde anschließend bei 80 °C eine Stunde gerührt. Man erhielt ein bei Raumtemperatur klares Produkt mit einer Viskosität von 21.750 mPa*s und einem NCO-Wert von w(NCO) = 0 %.

Die Einwaage des Vestanat® IPDI wurde so gewählt, dass die OH Gruppen des Silylpolyethers im Überschuss bezogen auf die NCO-Funktionen vorliegen, so dass mehrere Polyether miteinander verknüpft werden, und dementsprechend ein hochmolekularer Blockpolyether aufbaut wird.

### Beispiel 7:

### Herstellung eines Urethangruppen- und Isocyanatgruppenhaltigen Silylpolyethers mit IPDI

150 g des Silylpolyethers SP-2 (15 mmol entspricht 30 mmol OH-Funktionen) wurden in einen 250 mL Dreihalskolben mit Rückflußkühler, Thermometer und KPG-Rührer vorgelegt. Anschließend wurden 4,45 g (20 mmol entspricht 40 mmol NCO-Funktionen)Vestanat® IPDI der Firma Evonik Degussa GmbH (aliphatisches Isocyanat) langsam bei Raumtemperatur zudosiert. Die Mischung wurde auf 60 °C erwärmt und mit 0,07 g Dibutylzinndilaurat versetzt. Das Reaktionsgemisch wurde anschließend bei 60 °C eine Stunde gerührt. Man erhielt ein bei Raumtemperatur klares Produkt mit einer Viskosität von 184.000 mPa*s und einem NCO-Wert von w(NCO) = 0,23 %.

Die Einwaage des Vestanat® IPDI wurde so gewählt, dass die OH Gruppen des Silylpolyethers im Unterschuss bezogen auf die NCO-Funktionen vorliegen, so dass ein Teil der NCO-Funktionen übrig bleibt und sich dementsprechend Polymere bilden, die sowohl NCO- als auch Alkoxysilylgruppen tragen.

### Beispiel 8:

### Herstellung eines Urethangruppen- und Isocyanatgruppenhaltigen Silylpolyethers mit IPDI

150 g des Silylpolyethers SP-2 (15 mmol entspricht 30 mmol OH-Funktionen) wurden in einen 250 mL Dreihalskolben mit Rückflußkühler, Thermometer und KPG-Rührer vorgelegt. Anschließend wurden 6,67 g Vestanat® IPDI (30 mmol entspricht 60 mmol NCO-Funktionen) der Firma Evonik Degussa GmbH (aliphatisches Isocyanat) langsam bei Raumtemperatur zudosiert. Die Mischung wurde auf 60 °C erwärmt und mit 0,08 g Dibutylzinndilaurat versetzt. Das Reaktionsgemisch wurde anschließend bei 60 °C eine Stunde gerührt. Man erhielt ein bei Raumtemperatur klares Produkt mit einer Viskosität von 16.000 mPa*s und einem NCO-Wert von w (NCO) = 0,68 %.

Die Einwaage des Vestanat® IPDI wurde so gewählt, dass die OH Gruppen des Silylpolyethers im Unterschuss bezogen auf die NCO-Funktionen vorliegen, so dass ein Teil der NCO-Funktionen übrig bleibt und sich dementsprechend Polymere bilden, die sowohl NCO- als auch Alkoxysilylgruppen tragen.

### Beispiel 9:

### Herstellung eines Urethangruppen- und Isocyanatgruppenhaltigen Silylpolyethers mit IPDI

150 g des Silylpolyethers SP-3 (45 mmol entspricht 90 mmol OH-Funktionen) wurden in einen 250 mL Dreihalskolben mit Rückflußkühler, Thermometer und KPG-Rührer vorgelegt. Anschließend wurden 20,0 g Vestanat® IPDI (90 mmol entspricht 180 mmol NCO-Funktionen) der Firma Evonik Degussa GmbH (aliphatisches Isocyanat) langsam bei Raumtemperatur zudosiert. Die Mischung wurde auf 60 °C erwärmt und mit 0,09 g Dibutylzinndilaurat versetzt. Es setzte eine exotherme Reaktion ein, bei der sich das Reaktionsgemsich auf 66 °C erwärmte. Das Reaktionsgemisch wurde anschließend bei 60 °C eine Stunde gerührt. Man erhielt ein bei Raumtemperatur harzartiges, klares Produkt mit einem NCO-Wert von w(NCO) = 2,1 %.

Die Einwaage des Vestanat® IPDI wurde so gewählt, dass die OH Gruppen des Silylpolyethers im Unterschuss bezogen auf die NCO-Funktionen vorliegen, so dass ein Teil der NCO-Funktionen übrig bleibt und sich dementsprechend Polymere bilden, die sowohl NCO- als auch Alkoxysilylgruppen tragen.

### Beispiel 10:

### Herstellung eines Urethangruppen-haltigen Silylpolyethers mit Poly-THF-Block mit IPDI

8 g poly-Tetrahydrofuran (Terathane 1000 der Firma Invista, poly-Tetrahydrofuran mit einer mittleren molaren Masse von 1000 g/mol) wurden mit 5,3 g Vestanat® IPDI (24 mmol entspricht 48 mmol NCO-Funktionen) der Firma Evonik Degussa GmbH (aliphatisches Isocyanat) und 0,13 g Dibutylzinnlaurat in einen 500 mL Dreihalskolben mit Rückflußkühler, Thermometer und KPG-Rührer vorgelegt und gemischt. Anschließend wurden 20 g des Silylpolyethers SP-2 zugesetzt. Die Mischung wurde auf 60 °C erwärmt und eine Stunde gerührt. Anschließend wurden weitere 220 g des Silylpolyethers SP-2 zugesetzt, auf 80 °C geheizt und eine weitere Stunde gerührt. Man erhielt ein klares Produkt mit einem NCO-Wert von w(NCO) = 0 % und einer Viskosität von 31.500 mPa*s.

Die Einwaage des Vestanat® IPDI wurde so gewählt, dass die OH Gruppen des Silylpolyethers und des Polytetrahydrofurans im Unterschuss bezogen auf die NCO-Funktionen vorliegen, so dass ein Teil der OH-Funktionen übrig bleibt und sich dementsprechend Polymere bilden, die sowohl OH- als auch Alkoxysilylgruppen tragen und ein Teil des Polyetherbackbones aus Polytetrahydrofuran besteht.

### Beispiel 11:

### Herstellung eines Urethangruppen-haltigen Silylpolyethers mit IPDI in Gegenwart von Tetra-n-butyltitanat

185 g des Silylpolyethers SP-4 (theoretische Molgewicht 3086 g/mol, 60 mmol entspricht 60 mmol OH-Funktionen) wurden in einen 250 mL Dreihalskolben mit Rückflußkühler, Thermometer und KPG-Rührer vorgelegt. Anschließend wurden 6,67 g (30 mmol entspricht 60 mmol NCO-Funktionen) Vestanat® IPDI der Firma Evonik Degussa GmbH (aliphatisches Isocyanat) langsam bei Raumtemperatur zudosiert. Die Mischung wurde mit 0,1 g Tetra-n-butyltitanat versetzt und auf 120 °C erwärmt. Das Reaktionsgemisch wurde anschließend sieben Stunden lang gerührt. Man erhielt ein bei Raumtemperatur klares, orangefarbenes Produkt mit einem NCO-Wert von w(NCO) = 0,04 %.

Die Einwaage des Vestanat® IPDI wurde so gewählt, dass die OH Gruppen des Silylpolyethers im equimolarem Verhältnis bezogen auf die NCO-Funktionen vorliegen, so dass sich höhermolekulare Polymere bilden. Es zeigte sich weiterhin, dass auch Titanverbindungen geeignete Katalysatoren darstellen.

### Beispiel 12:

### Herstellung eines Urethangruppen-haltigen Silylpolyethers mit IPDI in Gegenwart von Wismut-Katalysatoren

123 g des Silylpolyethers SP-4 (theoretische Molgewicht 3086 g/mol, 40 mmol entspricht 40 mmol OH-Funktionen) wurden in einen 250 mL Dreihalskolben mit Rückflußkühler, Thermometer und KPG-Rührer vorgelegt. Anschließend wurden 4,45 g (20 mmol entspricht 40 mmol NCO-Funktionen) Vestanat® IPDI der Firma Evonik Degussa GmbH (aliphatisches Isocyanat) langsam bei Raumtemperatur zudosiert. Anschließend wurden 0,06 g Tegokat 722 (Wismut-octoat der Firma TIB Chemicals, Germany) zugesetzt. Die Mischung wurde auf 80 °C erwärmt. Das Reaktionsgemisch wurde anschließend vier Stunden lang gerührt. Man erhielt ein bei Raumtemperatur klares Produkt mit einem NCO-Wert von w(NCO) = 0,08 % und einer Viskosität von 385 mPa*s.

Die Einwaage des Vestanat® IPDI wurde so gewählt, dass die OH Gruppen des Silylpolyethers im equimolarem Verhältnis bezogen auf die NCO-Funktionen vorliegen, so dass sich höhermolekulare Polymere bilden. Es zeigte sich weiterhin, dass auch Wismutverbindungen geeignete Katalysatoren darstellen.

### Beispiel 13:

### Herstellung eines Urethangruppen-haltigen Silylpolyethers mit IPDI in Gegenwart von Aminen

123 g des Silylpolyethers SP-4 (theoretische Molgewicht 3086 g/mol, 40 mmol entspricht 40 mmol OH-Funktionen) wurden in einen 250 mL Dreihalskolben mit Rückflußkühler, Thermometer und KPG-Rührer vorgelegt. Anschließend wurden 4,45 g (20 mmol entspricht 40 mmol NCO-Funktionen) Vestanat® IPDI der Firma Evonik Degussa GmbH (aliphatisches Isocyanat) langsam bei Raumtemperatur zudosiert. Anschließend wurden 0,06 g 1,4-Diazabicyclo[2.2.2]octan zugesetzt. Die Mischung wurde auf 80 °C erwärmt. Das Reaktionsgemisch wurde anschließend sieben Stunde lang gerührt. Man erhielt ein bei Raumtemperatur trübes Produkt mit einem Rest-NCO-Wert von w(NCO) = 0,05 %.

Die Einwaage des Vestanat® IPDI wurde so gewählt, dass die OH Gruppen des Silylpolyethers im equimolarem Verhältnis bezogen auf die NCO-Funktionen vorliegen, so dass sich höhermolekulare Polymere bilden. Es zeigte sich weiterhin, dass auch Amine geeignete Katalysatoren darstellen.

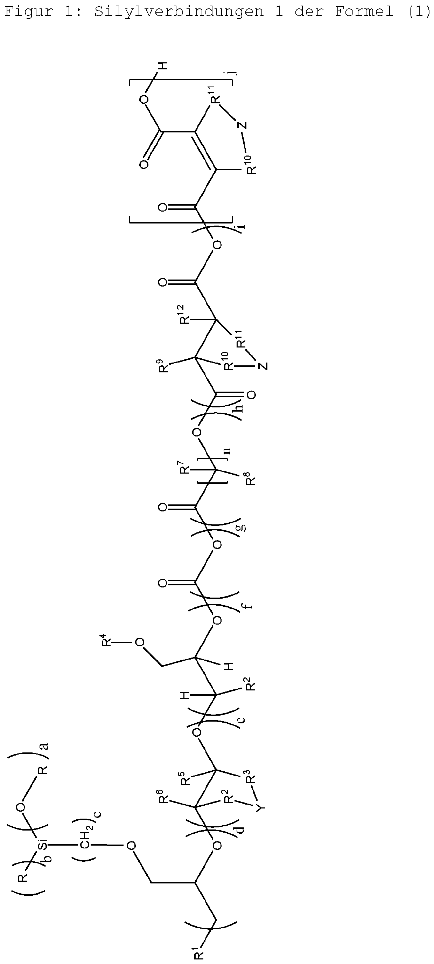

## Patentansprüche

1. Urethangruppenhaltige Reaktionsprodukte erhältlich durch die Umsetzung von
a) mindestens einer eine oder mehrere Isocyanatgruppen aufweisenden Verbindung mit
b) mindestens einer eine oder mehrere alkoxysilylgruppen tragenden Verbindung, die zusätzlich mindestens eine Hydroxylgruppe trägt,
c) optional in Anwesenheit von einem oder mehreren Katalysatoren,
d) optional in Anwesenheit von weiteren gegenüber den Reaktionsprodukten reaktiven Komponenten,
e) optional in Anwesenheit von weiteren gegenüber den Reaktionsprodukten und Edukten nicht reaktiven Verbindungen, wobei als Komponente (b) eine Silylverbindung 1 (Formel 1) 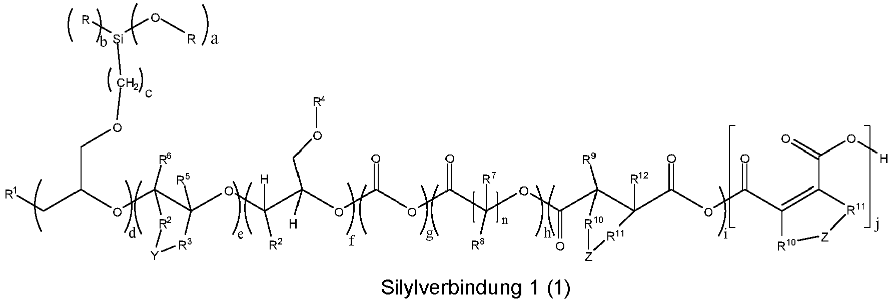 wobei
a eine ganze Zahl von 1 bis 3 ist,
b eine ganze Zahl von 0 bis 2 ist,
c eine ganze Zahl von 0 bis 22 ist,
d eine ganze Zahl > 1 bis 500 ist,
e eine ganze Zahl von 0 bis 10.000 ist,
f eine ganze Zahl von 0 bis 1.000 ist,
g eine ganze Zahl von 0 bis 1.000 ist,
h, i und j unabhängig voneinander ganze Zahlen von 0 bis 500 sind,
n eine ganze Zahl zwischen 2 und 8 ist
und
R unabhängig voneinander einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt; sowie,
R¹ ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si und/oder N unterbrochen sein kann, oder ein oxyaromatisches System enthaltender Rest,
R² oder R³, sowie R⁵ oder R⁶ sind gleich oder auch unabhängig voneinander H und/oder ein gesättigter und/oder einfach und/oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind;
die Kohlenwasserstoffreste R² und R³ können cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20 Kohlenstoffatomen,
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
R⁷ und R⁸ sind unabhängig voneinander entweder Wasserstoff, Alkyl-, Alkoxy-, Aryl- oder Aralkylgruppen,
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann, mit der Maßgabe, dass die Fragmente mit den Indices d, e, f, und/oder h untereinander
frei permutierbar, das heißt innerhalb der Polyetherkette gegeneinander austauschbar sind und wahlweise statistisch verteilt oder blockartig aneinandergereiht vorliegen können und damit in der Sequenz innerhalb der Polymerkette gegeneinander austauschbar sind, wobei cyclische Anhydride sowie Kohlendioxid nicht in homologen Blöcken vorliegen, verwendet wird,
wobei die Reaktionsprodukte, bezogen auf das individuelle Molekül des_Reaktionsprodukts im Durchschnitt mehr als eine Alkoxysilylgruppe pro Urethangruppe oder deren Reaktionsfolgeprodukte aufweisen.

2. Reaktionsprodukte nach Anspruch 1, **dadurch gekennzeichnet, dass** die Komponente (a) nach Anspruch 1 keine Alkoxysilyl- und/oder Alkylsilylgruppen trägt.

3. Reaktionsprodukte nach zumindest einem der Ansprüche 1 bis 2, **dadurch gekennzeichnet, dass** die Komponente (d) nach Anspruch 1 ausgewählt ist aus Verbindungen mit funktionellen Gruppen mit protischem Wasserstoff ausgewählt aus der Gruppe der Alkohole, Amine, Thiole, fluororganische Hydroxyverbindungen, Alkoxysilane und/oder Wasser.

4. Zusammensetzungen enthaltend mindestens ein oder mehrere Reaktionsprodukte nach zumindest einem der Ansprüche 1 bis 3.

5. Zusammensetzungen **nach Anspruch** 4 enthaltend mindestens ein oder mehrere urethangruppenhaltige Reaktionsprodukte nach zumindest einem der Ansprüche 1 bis 3 und weitere Verbindungen mit mindestens einer Isocyanat-, Hydroxy-, Epoxy- und/oder ungesättigten C=C-Gruppe, Acrylate, Methacrylate, Vinyl-, Allyl-Verbindungen und/oder reaktive Silane oder silylfunktionelle Verbindungen.

6. Zusammensetzungen nach Anspruch 5, **dadurch gekennzeichnet, dass** als Silane solche der Formel (4)
UₓSiV₍₄₋ₓ₎ (4)
wobei
U gleiche oder verschiedene, in Anwesenheit von Wasser und katalytischer Mengen Brönstedt-Säure bei Temperaturen bis 100°C nicht hydrolysierbare Gruppen,
V gleiche oder verschiedene in Anwesenheit von Wasser und katalytischer Mengen Brönstedt-Säure bei Temperaturen bis 100°C hydrolysierbare Gruppen oder Hydroxygruppen und
X 1, 2, 3 oder 4 darstellen,
und/oder als silylfunktionelle Verbindungen solche der Formel (5) 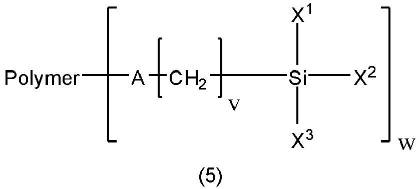 wobei
X¹, X² und X³ unabhängig voneinander Alkyl- oder Alkoxyreste mit 1-8 C-Atomen sind,
A einen Carboxy-, Carbamat-, Amid-, Carbonat-, Ureido- oder Sulfonatgruppe enthaltenden Rest darstellt oder ein Sauerstoffatom bedeutet,
w eine ganze Zahl von 1 bis 8 ist und
v eine ganze Zahl von 1 bis 20, bevorzugt 1 bis 15 und insbesondere 1 bis 5 ist und der Polymerrest ausgewählt ist aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten,
verwendet werden.

7. Verfahren zur Herstellung von Reaktionsprodukten nach zumindest einem der Ansprüche 1 bis 3, **dadurch gekennzeichnet, dass** eine oder mehrere alkoxysilylgruppentragende Verbindung, die zusätzlich mindestens eine Hydroxylgruppe trägt, mit Isocyanaten umgesetzt werden.

8. Verfahren nach Anspruch 7, **dadurch gekennzeichnet, dass** ein molarer Überschuss der Komponente (a) nach Anspruch 1, bezogen auf Komponente (b) eingesetzt wird.

9. Verfahren nach Anspruch 8, **dadurch gekennzeichnet, dass** mit überschüssigen Isocyanatgruppen enthaltenden Verbindungen der Komponente (a) alkoxysilylmodifizierten Allophanate gebildet werden.

10. Verfahren nach Anspruch 7, **dadurch gekennzeichnet, dass** ein molarer Überschuss der Komponente (b) bezogen auf die Komponente (a) nach Anspruch 1 eingesetzt wird.

11. Verfahren nach Anspruch 8, **dadurch gekennzeichnet, dass** weitere reaktive Komponenten mit den Reaktionsprodukten nach zumindest einem der Ansprüche 1 bis 3 zu Copolymerisaten umgesetzt werden.

12. Verfahren nach Anspruch 11, **dadurch gekennzeichnet, dass** die reaktiven Komponenten ausgewählt sind aus Verbindungen der Gruppe der Alkohole, Diole, Polyole, Thiole, Amine, aminofunktionelle Polymere, Aminoalkoxysilane, Alkoxysilane, acrylierte Alkohole, organische Alkoxylate, Polyetherdiole, Polyesterdiole, Polytetrahydrofuran, Siliconpolyethercopolymere, OH-funktionelle Polyetherreste, Säurechloride und/oder fluororganische Verbindungen.

## Claims

1. Urethane-containing reaction products obtainable by the reaction of
a) at least one compound having one or more isocyanate groups with
b) at least one compound bearing one or more alkoxysilyl groups and additionally bearing at least one hydroxyl group,
c) optionally in the presence of one or more catalysts,
d) optionally in the presence of further components reactive towards the reaction products,
e) optionally in the presence of further compounds not reactive towards the reaction products and reactants, wherein component (b) used is a silyl compound 1 (formula 1) 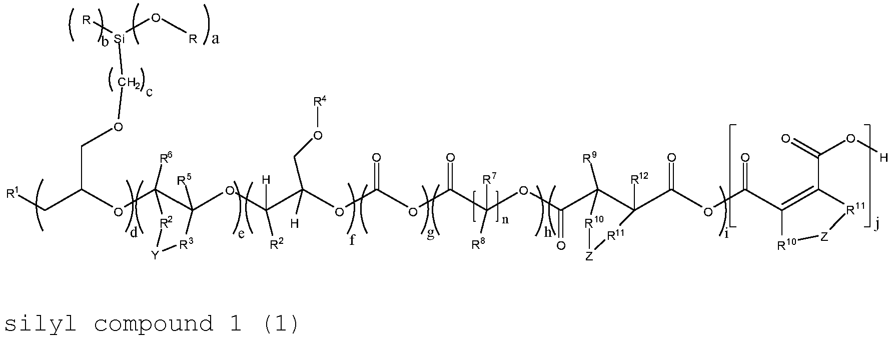 where
a is an integer from 1 to 3,
b is an integer from 0 to 2,
c is an integer from 0 to 22,
d is an integer from > 1 to 500,
e is an integer from 0 to 10 000,
f is an integer from 0 to 1000,
g is an integer from 0 to 1000,
h, i and j are each independently integers from 0 to 500,
n is an integer between 2 and 8
and
R is independently one or more identical or different radicals selected from linear or branched, saturated, mono-or polyunsaturated alkyl radicals having 1 to 20 carbon atoms or haloalkyl groups having 1 to 20 carbon atoms; and
R¹ is a hydroxyl group or a saturated or unsaturated, linear, branched or cyclic or further-substituted oxyorganic radical having 1 to 1500 carbon atoms, where the chain may also be interrupted by heteroatoms such as O, S, Si and/or N, or a radical comprising an oxyaromatic system,
R² or R³, and R⁵ or R⁶, are the same or else independently H and/or a saturated and/or mono- and/or polyunsaturated, also further-substituted, optionally mono- or polyvalent hydrocarbon radical, where the R⁵ or R⁶ radicals are each a monovalent hydrocarbon radical; the hydrocarbon radicals R² and R³ may be bridged cycloaliphatically via the Y fragment; Y may be absent, or else may be a methylene bridge having 1 or 2 methylene units; when Y is absent, R² or R³ are independently a linear or branched radical having 1 to 20 carbon atoms,
R⁴ is a linear or branched alkyl radical of 1 to 24 carbon atoms or an aromatic or cycloaliphatic radical which may optionally in turn bear alkyl groups;
R⁷ and R⁸ are each independently hydrogen, alkyl, alkoxy, aryl or aralkyl groups,
R⁹, R¹⁰, R¹¹ and R¹² are each independently hydrogen, alkyl, alkenyl, alkoxy, aryl or aralkyl groups, where the hydrocarbon radical may be bridged cycloaliphatically or aromatically via the Z fragment and Z may be either a divalent alkylene or alkenylene radical,
with the proviso that the fragments with the indices d, e, f and/or h are freely permutable with one another, i.e. are exchangeable for one another within the polyether chain and, as desired, are distributed randomly or may be present successively in blocks, and hence are exchangeable for one another in the sequence within the polymer chain,
wherein cyclic anhydrides and carbon dioxide are present not in homologous blocks,
wherein the reaction products, based on the individual molecule of the reaction product, have an average of more than one alkoxysilyl group per urethane group or reaction conversion products thereof.

2. Reaction products according to Claim 1, **characterized in that** component (a) according to Claim 1 bears no alkoxysilyl and/or alkylsilyl groups.

3. Reaction products according to at least one of Claims 1 and 2, **characterized in that** component (d) according to Claim 1 is selected from compounds with functional groups with protic hydrogen, selected from the group of the alcohols, amines, thiols, organofluorine hydroxyl compounds, alkoxysilanes and/or water.

4. Compositions comprising at least one or more than one reaction product according to at least one of Claims 1 to 3.

5. Compositions according to Claim 4 comprising at least one or more than one urethane-containing reaction product according to at least one of Claims 1 to 3 and further compounds with at least one isocyanate, hydroxyl, epoxy and/or unsaturated C=C group, acrylates, methacrylates, vinyl compounds, allyl compounds and/or reactive silanes or silyl-functional compounds.

6. Compositions according to Claim 5, **characterized in that** the silanes used are those of the formula (4)
UₓSiV₍₄₋ₓ₎ (4)
where
U represents identical or different groups not hydrolysable in the presence of water and catalytic amounts of Brønsted acid at temperatures up to 100°C,
V represents identical or different groups hydrolysable in the presence of water and catalytic amounts of Brønsted acid at temperatures up to 100°C, or hydroxyl groups, and
X is 1, 2, 3 or 4,
and/or the silyl-functional compounds used are those of the formula (5) 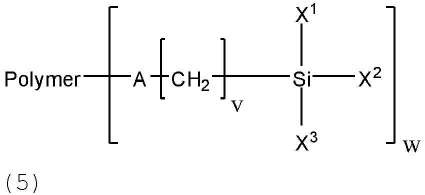 where
X¹, X² and X³ are each independently alkyl or alkoxy radicals having 1-8 carbon atoms,
A is a radical containing a carboxyl, carbamate, amide, carbonate, ureido or sulphonate group, or is an oxygen atom,
w is an integer from 1 to 8 and
v is an integer from 1 to 20, preferably 1 to 15 and especially 1 to 5, and the
polymer radical is selected from a group consisting of alkyd resins, oil-modified alkyd resins, saturated or unsaturated polyesters, natural oils, epoxides, polyamides, polycarbonates, polyethylenes, polypropylenes, polybutylenes, polystyrenes, ethylenepropylene copolymers, (meth)acrylates, (meth)acrylamides and salts thereof, phenol resins, polyoxymethylene homo- and copolymers, polyurethanes, polysulphones, polysulphide rubbers, nitrocelluloses, vinyl butyrates, vinyl polymers, ethylcelluloses, cellulose acetates and/or butyrates, rayon, shellac, waxes, ethylene copolymers, organic rubbers, polysiloxanes, polyethersiloxanes, silicone resins, polyethers, polyetheresters and/or polyethercarbonates.

7. Process for preparing reaction products according to at least one of Claims 1 to 3, **characterized in that** a compound bearing one or more alkoxysilyl groups and additionally bearing at least one hydroxyl group is reacted with isocyanates.

8. Process according to Claim 7, **characterized in that** a molar excess of component (a) according to Claim 1, based on component (b), is used.

9. Process according to Claim 8, **characterized in that** alkoxysilyl-modified allophanates are formed with compounds of component (a) containing excess isocyanate groups.

10. Process according to Claim 7, **characterized in that** a molar excess of component (b) based on component (a) according to Claim 1 is used.

11. Process according to Claim 8, **characterized in that** further reactive components are reacted with the reaction products according to at least one of Claims 1 to 3 to give copolymers.

12. Process according to Claim 11, **characterized in that** the reactive components are selected from compounds of the group of the alcohols, diols, polyols, thiols, amines, amino-functional polymers, aminoalkoxysilanes, alkoxysilanes, acrylated alcohols, organic alkoxylates, polyetherdiols, polyesterdiols, polytetrahydrofuran, silicone polyether copolymers, OH-functional polyether radicals, acid chlorides and/or organofluorine compounds.

## Revendications

1. Produits de réaction contenant des groupes uréthane, pouvant être obtenus par la réaction
a) d'au moins un composé présentant un ou plusieurs groupes isocyanate, avec
b) au moins un composé portant un ou plusieurs groupes alcoxysilyle, qui en outre porte au moins un groupe hydroxyle,
c) éventuellement en présence d'un ou plusieurs catalyseurs,
d) éventuellement en présence de composants supplémentaires réactifs vis-à-vis des produits de réaction,
e) éventuellement en présence de composés supplémentaires non réactifs vis-à-vis des produits de réaction et des éduits, dans lesquels on utilise en tant que composant (b) un composé silylé 1 (formule 1), 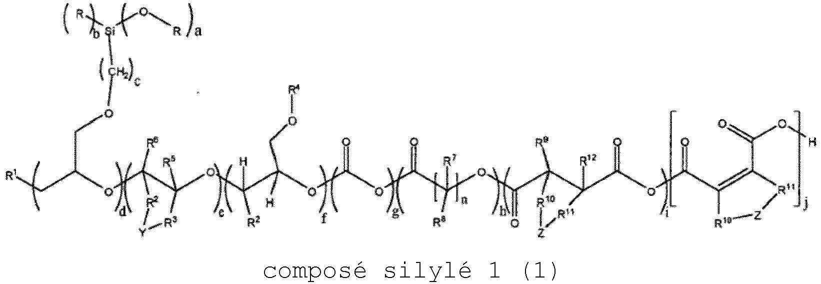 dans laquelle
a est un nombre entier de 1 à 3,
b est un nombre entier de 0 à 2,
c est un nombre entier de 0 à 22,
d est un nombre entier > 1 jusqu'à 500,
e est un nombre entier de 0 à 10 000,
f est un nombre entier de 0 à 1 000,
g est un nombre entier de 0 à 1 000,
h, i et j sont indépendamment les uns des autres des nombres entiers de 0 à 500,
n est un nombre entier compris entre 2 et 8,
et
R représente, indépendamment les uns des autres, un ou plusieurs radicaux identiques ou différents, choisis parmi des radicaux alkyle ayant 1 à 20 atomes de carbone ou des groupes halogénonalkyle ayant 1 à 20 atomes de carbone, linéaires ou ramifiés, saturés, une fois saturés ou plusieurs fois insaturés ; ainsi que
R¹ est un groupe hydroxyle ou un radical oxyorganique ayant 1 à 1500 atomes de carbone, saturé ou insaturé, linéaire, ramifié ou cyclique ou en outre substitué, la chaîne pouvant aussi être interrompue par des hétéroatomes tels que O, S, Si et/ou N, ou un radical contenant un système oxyaromatique,
R² ou R³, ainsi que R⁵ ou R⁶, sont identiques ou différents ou aussi sont, indépendamment l'un de l'autre, H et/ou un radical hydrocarboné éventuellement monovalent ou polyvalent, saturé et/ou saturé une fois et/ou plusieurs fois insaturé, aussi en outre substitué, les radicaux R⁵ ou R⁶ étant tels qu'ils sont identiques à un radical hydrocarboné monovalent ;
les radicaux hydrocarbonés R² et R³ peuvent être pontés de manière cycloaliphatique par l'intermédiaire du fragment Y ; Y peut ne pas être présent, ou aussi être un pont méthylène ayant 1 ou 2 motifs méthylène, si Y n'est pas présent, alors R² et R³ sont indépendamment l'un de l'autre identiques à un radical linéaire ou ramifié ayant 1 à 20 atomes de carbone,
R⁴ correspond à un radical alkyle linéaire ou ramifié ayant 1 à 24 atomes de carbone ou à un radical aromatique ou cycloaliphatique qui éventuellement peut pour sa part porter des groupes alkyle ;
R⁷ et R⁸ sont indépendamment l'un de l'autre soit hydrogène, soit des groupes alkyle, alcoxy, aryle ou aralkyle,
R⁹, R¹⁰, R¹¹ et R¹² sont indépendamment les uns des autres soit hydrogène, soit des groupes alkyle, alcényle, alcoxy, aryle ou aralkyle, le radical hydrocarboné pouvant être ponté de manière cycloaliphatique ou aromatique par l'intermédiaire du fragment Z, et Z peut représenter aussi bien un radical alkylène qu'un radical alcénylène, divalent,
à la condition que les fragments comportant les indices d, e, f et/ou h puissent être librement permutés les uns en les autres, ce qui signifie, à l'intérieur de la chaîne polyéther, qu'ils peuvent être remplacés les uns par les autres et peuvent être présents au choix selon une distribution statistique ou juxtaposés sous forme de blocs, et ainsi peuvent être remplacés les uns par les autres dans la séquence à l'intérieur de la chaîne polymère,
des anhydrides cycliques, ainsi que le dioxyde de carbone, n'étant pas présents dans des blocs homologues,
les produits de réaction présentant, par rapport à la molécule individuelle du produit de réaction, en moyenne plus d'un groupe alcoxysilyle par groupe uréthane ou ses produits dérivés de réaction.

2. Produits de réaction selon la revendication 1, **caractérisés en ce que** le composant (a) selon la revendication 1 ne porte pas de groupes alcoxysilyle et/ou alkylsilyle.

3. Produits de réaction selon au moins l'une des revendications 1 et 2, **caractérisés en ce que** le composant (d) selon la revendication 1 est choisi parmi les composés comportant des groupes fonctionnels dotés d'hydrogène protique choisis dans le groupe des alcools, des amines, des thiols, des composés hydroxylés fluoroorganiques, des alcoxysilanes et/ou de l'eau.

4. Compositions contenant au moins un ou plusieurs produits de réaction selon au moins l'une revendications 1 à 3.

5. Compositions selon la revendication 4, contenant au moins un ou plusieurs produits de réaction contenant des groupes uréthane selon au moins l'une des revendications 1 à 3 et
des composés supplémentaires comportant au moins un groupe isocyanate, hydroxy, époxy et/ou C=C insaturé, des acrylates, des méthacrylates, des composés vinyliques, des composés allyliques, et/ou des silanes réactifs ou des composés à fonctionnalité silyle.

6. Compositions selon la revendication 5, **caractérisées en ce qu'**on utilise en tant que silanes ceux de formule (4)
UₓSiV₍₄₋ₓ₎ (4)
dans laquelle
U représente des groupes identiques ou différents, non hydrolysables à des températures jusqu'à 100 °C en présence d'eau et de quantités catalytiques d'un acide de Brönstedt,
V représente des groupes identiques ou différents, hydrolysables à des températures jusqu'à 100 °C en présence d'eau et de quantités catalytiques d'un acide de Brönstedt, ou des groupes hydroxy, et
X représente 1, 2, 3 ou 4,
et/ou en tant que composés à fonctionnalité silyle ceux de formule (5) 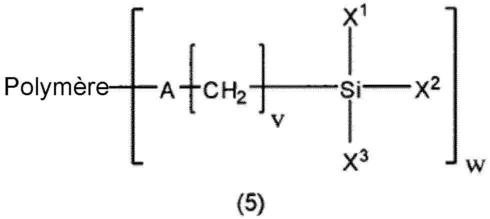 dans laquelle
X¹, X² et X³ représentent indépendamment les uns des autres des radicaux alkyle ou alcoxy ayant 1 à 8 atomes de carbone,
A représente un radical contenant un groupe carboxy, carbamate, amide, carbonate, uréido ou sulfonate, ou signifie un atome d'oxygène,
w représente un nombre entier de 1 à 8, et
v représente un nombre entier de 1 à 20, de préférence de 1 à 15 et en particulier de 1 à 5, et le radical polymère est choisi dans un groupe constitué par les résines alkydes, les résines alkydes modifiées par une huile, les polyesters saturés ou insaturés, les huiles naturelles, les époxydes, les polyamides, les polycarbonates, les polyéthylènes, les polypropylènes, les polybutylènes, les polystyrènes, les copolymères éthylène-propylène, les (méth)acrylates, les (méth)acrylamides et leurs sels, les résines phénoliques, les homopolymères et copolymères de polyoxyméthylène, les polyuréthanes, les polysulfones, les caoutchoucs de polysulfure, les nitrocelluloses, les butyrates de vinyle, les polymères vinyliques, les éthylcelluloses, les acétates et/ou les butyrates de cellulose, la rayonne, la gomme laque, les cires, les copolymères de l'éthylène, les caoutchoucs organiques, les polysiloxanes, les polyéthersiloxanes, les résines de silicone, les polyéthers, les polyétheresters et/ou les polyéthercarbonates.

7. Procédé de fabrication de produits de réaction selon au moins l'une des revendications 1 à 3, **caractérisé en ce qu'**on fait réagir avec des isocyanates un ou plusieurs composés portant des groupes alcoxysilyle, qui en outre portent au moins un groupe hydroxyle.

8. Procédé selon la revendication 7, **caractérisé en ce qu'**on utilise un excès molaire du composant (a) selon la revendication 1, par rapport au composant (b).

9. Procédé selon la revendication 8, **caractérisé en ce qu'**on forme des allophanates modifiés par alcoxysilyle avec des composés en excès du composant (a) contenant des groupes isocyanate.

10. Procédé selon la revendication 7, **caractérisé en ce qu'**on utilise un excès molaire du composant (b), par rapport au composant (a) selon la revendication 1.

11. Procédé selon la revendication 8, **caractérisé en ce qu'**on fait réagir des composants réactifs supplémentaires avec les produits de réaction selon au moins l'une des revendications 1 à 3 pour obtenir des copolymérisats.

12. Procédé selon la revendication 11, **caractérisé en ce que** les composants réactifs sont choisis parmi les composés du groupe des alcools, des diols, des polyols, des thiols, des amines, des polymères à fonctionnalité amino, des aminoalcoxysilanes, des alcoxysilanes, des alcools acylés, des alcoxylates organiques, des polyétherdiols, des polyesterdiols, du polytétrahydrofuranne, des copolymères de silicone-polyéther, des radicaux polyéther à fonctionnalité OH, des chlorures d'acide et/ou des composés fluoroorganiques.
